# EUROPEAN PATENT APPLICATION

(11) **EP 1 239 325 A1**
(43) Date of publication of application: **11.09.2002**
(21) Application number: 02075556.7
(22) Date of filing: 11.02.2002
(51) Int. Cl.: G03B 1/24, G03B 1/38, G03B 21/44

(54) **A double speed intermittent film pull down for a movie projector**

(30) Priority: 22.02.2001 US 791309
(71) Applicant: EASTMAN KODAK COMPANY, Rochester, New York 14650 (US)
(72) Inventor: Blanding, Douglas, Eastman Kodak Company, Rochester, New York 14650-2201 (US)
(74) Representative: Parent, Yves

(57) **Abstract**

A double speed intermittent film pull down for a movie projector (100) comprises a sprocket (122), which advances the film (114) a frame at a time. A star wheel (140) is mounted on a common shaft (132) with the sprocket (122). A cam (134) turns the sprocket (122) every other rotation of the cam (134). A shutter (106) is mounted on a common shaft (132) with the cam (134) and interrupts light to the frame of the film (114). The common shaft (132) for the cam (134) and shutter (106) turns at approximately twice the speed of the common shaft (132) for the star wheel (140) and sprocket (122).

## Description

The present invention relates in general to a drive mechanism for a motion picture projector and in particular, to a modified Geneva Mechanism which advances a star wheel in one-eight rotation of the driver.

In a typical theatrical movie projector, film is advanced through a projection gate at a frame rate of 24 frames/second. In other words, every 1/24 second, a new film frame is "pulled down" into the projection aperture and the image contained on the film frame is projected onto the screen. During the time the film frame is being "pulled down," a shutter closes and the screen is dark. After the frame has come to rest in the projection aperture, the shutter opens.

The reason that the shutter must close during pull down is that the projected movie image would be degraded if the moving film were projected onto the screen. Therefore, the projected movie image necessarily "flickers" as the shutter opens and closes. It has been found that a flicker rate of 24 Hz produces a noticeable flicker and is objectionable to the audience. This problem is much less noticeable at a flicker rate of 48 Hz. For this reason, it is common to use a shutter which closes again while the film frame is motionless in the projection gate. From the standpoint of flicker, this results in a good quality movie projection.

Another important aspect of movie projection quality is screen brightness. While closing the shutter twice per frame is good from the standpoint of flicker, it is bad from the standpoint of screen brightness. To achieve high screen brightness while still having a shutter rate of 48 Hz, the duration of the time the shutter is closed in comparison to the time that it is open should be as short as possible. But the length of time the shutter is closed is determined by the time required for film pull down. So screen brightness can be improved by reducing the film pull down time.

For example, in a typical projector, the film is advanced by a sprocket mounted on the shaft of a four point Geneva Mechanism star, which is, in turn, driven intermittently by a Geneva Mechanism pinwheel. Such a drive is described in U.S. Patent No. 1,774,789, issued September 2, 1930. The Geneva Mechanism driver shaft rotates at a speed of 24 revs/sec, which advances the film a rate of 24 frames/sec. This type of drive is still standard in the motion picture projection industry. In such an intermittent drive, the time required for pull down is one-fourth of the time of one complete rotation of the driver shaft. The driver shaft, completes one rotation in 1/24 second (approximately 40 ms). Thus, pull down occurs in approximately 10 ms.

Since the shutter is designed to be closed twice per frame and the duration of each shutter closure is equal to the pull down time, the shutter is closed one-half the time, approximately 20 ms out of every 40 ms. Clearly, if pull down could be accomplished in half the time required by a standard Geneva Mechanism (one-eight rotation of the driver shaft instead of one-fourth rotation), the shutter would then need to be closed twice for only 5 ms each time, a total of 10 ms out of every 40 ms. This would obviously be a big improvement for screen brightness.

According to one aspect of the present invention, a double speed intermittent film pull down for a movie projector comprises a sprocket, which advances the film a frame at a time. A star wheel is mounted on a common shaft with the sprocket. A cam turns the sprocket every other rotation of the cam. A shutter is mounted on a common shaft with the cam and interrupts light to the frame of the film. The common shaft for the cam and shutter turns at approximately twice the speed of the common shaft for the star wheel and sprocket.

According to one embodiment of the invention, the standard Geneva intermittent drive mechanism, which achieves star wheel advance in one-fourth rotation of the driver, is modified to advance star wheel in one-eight rotation of the driver. This is accomplished by causing the driver to rotate at double speed while also reciprocating axially, causing the driver pin to engage the star wheel slot only every second time around.

It is necessary for these two shutter intervals to be nearly equal in duration in order to limit perceived flicker. Therefore, since one blanking period must be approximately one-fourth of the frame period in order to blank the projected image as the film moves, the other blanking period must be of essentially the same duration.

The invention and its objects and advantages will become more apparent in the detailed description of the preferred embodiment presented below.
Figure 1 is a perspective view of a prior art movie projector;
Figure 2 is a top view of a prior art Geneva Mechanism;
Figure 3 is a perspective view of a driver and cam assembly according to the present invention;
Figure 4 is a perspective view of the driver shown in Figure 3 with a counter weight;
Figure 5 is a perspective view in partial section which shows rotating hubs; and
Figure 6 is a perspective view of the entire mechanism.

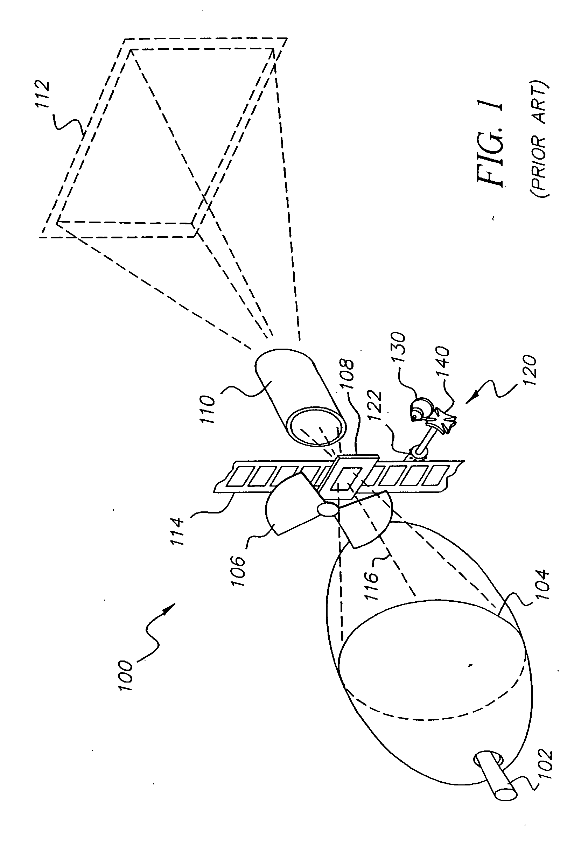

The traditional prior art motion picture film projector, also known as a movie projector 100, is illustrated in Figure 1, where a beam of light 116 generated by arc lamp 102. Projector 100 uses elliptical reflector 104 as beam shaping optics to focus light beam 116 past shutter 106 and through aperture plate 108 to illuminate a frame of the film 114. The film frame is then imaged by projection lens 110 onto screen 112. Each frame is sequentially moved through the film gate (not shown) and past the aperture plate 108 by sprocket 122, which is driven by Geneva Mechanism 120, whose main components are star wheel 140 and driver 130.

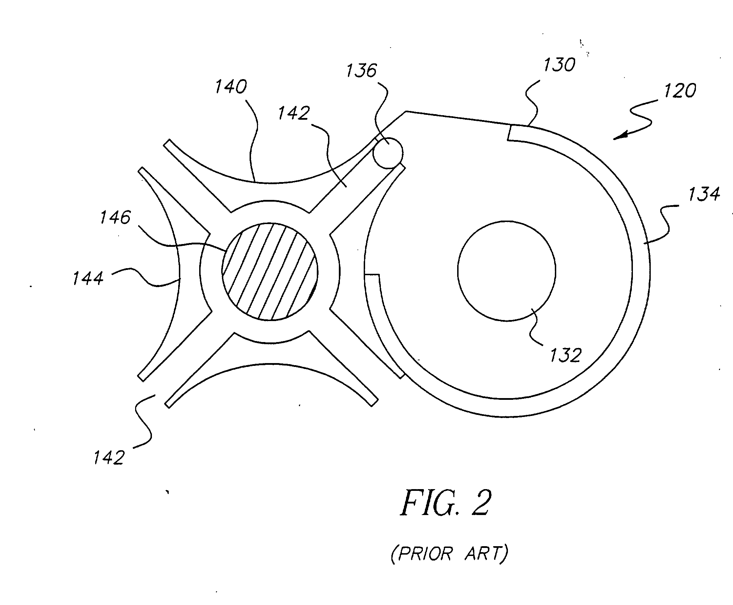

The conventional Geneva Mechanism 120, shown in greater detail in Figure 2, comprises a driver 130 and a star wheel 140, which together drive a load, such as film, in a controlled intermittent fashion, while driver 130 itself is driven continuously with essentially constant rotary motion. The rotational motion of star wheel 140 includes an index followed by a dwell for each revolution of driver 130.

Driver 130 typically includes a drive shaft 132, a restraining cam 134, and a drive arm bearing a drive pin 136. Driver 130 is typically attached to a flywheel (not shown) and a drive motor or gear train (not shown), which provide a constant angular velocity input to driver 130.

Star wheel 140 comprises a shaft 146, which is attached at one end to star wheel 140, and at the other end to a load to be driven. In the case of a motion picture projector, a sprocket 122 is attached to the shaft 146, and the sprocket in turn engages the perforations of the film, thereby transferring the intermittent drive motion to the film. In the typical Geneva Mechanism, the star wheel 140 comprises a number of straight slots 142, the center lines of which extend radially outward from the center of rotation, and where straight slots 142 are positioned at equal angles about the center of rotation. In between straight slots 142 are a number of concave surfaces 144. Concave surfaces 144 and straight slots 142 alternate around the periphery of star wheel 140 and are equal in number.

During an indexing motion, drive pin 136 enters one of straight slots 142, and then angularly accelerates star wheel 140 about its center of rotation. This acceleration continues until the midpoint of the indexing motion, where drive pin 136 crosses the line joining the centers of rotation of star wheel 140 and driver 130. At this point star wheel 140 begins an angular deceleration which continues until drive pin 136 exits straight slot 142. The star wheel 140 attains its maximum angular velocity at the mid-index position, while both at the beginning and end of index in its angular velocity is zero. As the star wheel 140 depicted in Figure 2 has four straight slots, its complete motion for one index from rest to peak velocity and back to rest corresponds to 90° of rotation.

Following the indexing motion there occurs a dwell period, during which drive pin 136 is not in engagement with star wheel 140. Driver 130 then rotates to complete one revolution such that it subsequently returns to a position of initial engagement with the next straight slot 142 of star wheel 140. During the dwell period, the star wheel 140 is restrained from any rotation by the engagement of one of its concave surfaces 144 with convex surface of restraining cam 134 of driver 130.

The method of operation of a standard Geneva Mechanism is well known. The method of operation of the present invention is similar, except that the driver is caused to undergo a reciprocating axial motion in addition to its rotating motion. These two motions must occur simultaneously and in an exact phase relation to each other in order for the driver pin to engage the star wheel only every second rotation. The mechanism that causes the combined axial and rotary motion of the driver are intended to be only exemplary. Other designs which accomplish the same purpose are intended to fall within the scope of this invention.

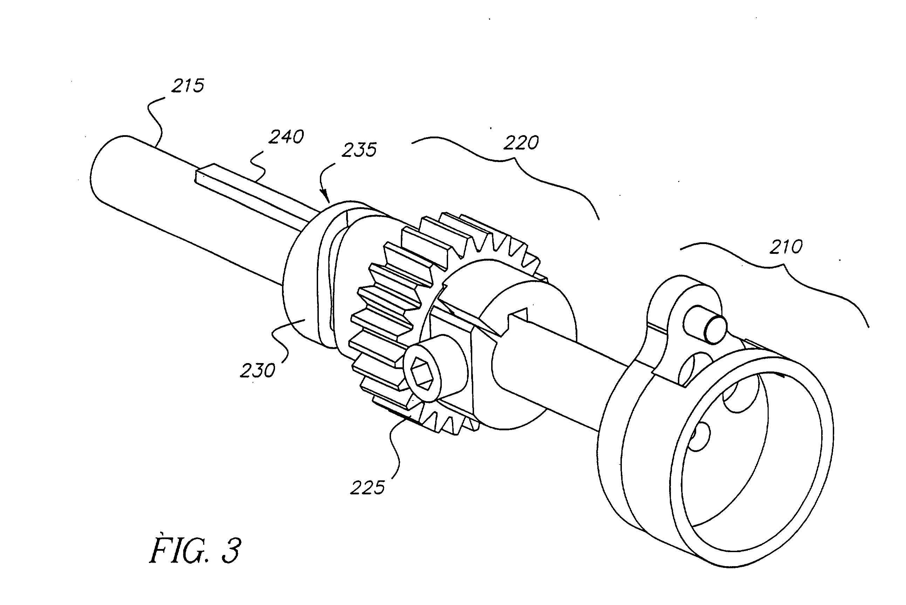

In Figure 3 a driver is shown, which is comprised of head 210 and shaft 215. Rigidly clamped to the shaft is cam/gear assembly 220. Cam/gear assembly 220 is comprised of gear 225, which is pressed onto hub 230. Slot 235 is cut into hub 230 and is cylindroidal in shape. Another gear, not shown in Figure 3, will engage gear 225 to cause the driver to rotate. The purpose of the cylindriodally shaped slot is to cause the driver to reciprocate axially. This will become clear from the discussion below.

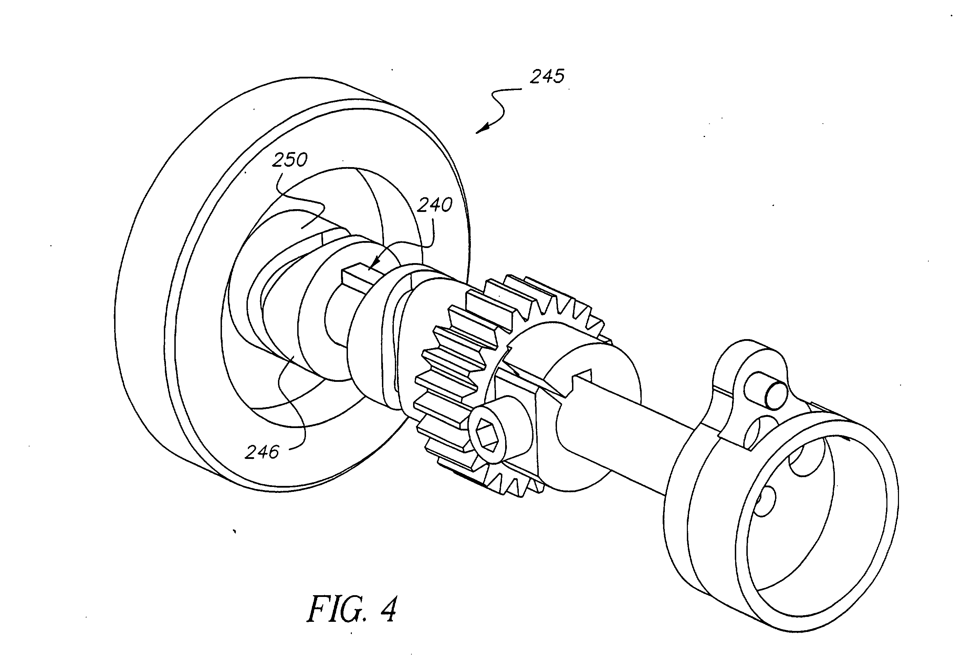

Figure 4 shows counterweight 245 mounted on shaft 215. Key 240 insures that counterweight 245 will rotate along with shaft 215, but allows it to move freely in an axial direction. Counterweight 245 has a hub section 246 with a cylindroidally shaped slot 250. Slot 250 and slot 235 are in opposed phase relation with each other which will cause the axial motion of the counterweight to be exactly equal but opposite in direction to the axial motion of the driver.

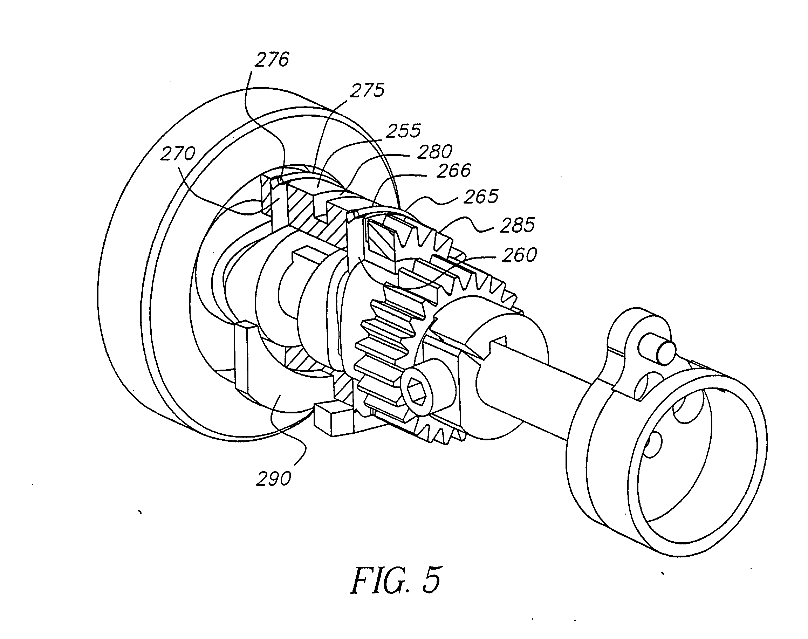

Figure 5 shows sleeve 255, cutaway in section view, which fits rotatably over hubs 230 and 246. Two round pins 260 fit in diametrically opposed holes in sleeve 255 and extend inwardly into slot 235. Clip 265 fits in grooves 266 and retains pins 260 in place. Two round pins 270 fit in diametrically opposed holes in sleeve 255 and extend inwardly into slot 250. Clip 275 fits in grooves 276 and retains pins 270 in place. The diameter of the pins is approximately .001 inches less than the width of the slots so that as the sleeve is rotated, the pins will be free to slide in the slots. The sleeve has a rectangular groove 280 which is just .001 inches wider than the thickness of fixed plate 290. This allows sleeve 255 to rotate but prevents it from moving axially. Gear 285 is pressed onto sleeve 255.

Rotation of the sleeve by one-quarter turn causes the driver to retract axially and the counterweight to move forward axially by an equal amount. Rotation of the sleeve by an additional 290 degrees causes the driver and counterweight to return to their original axial positions. Alternatively, if the sleeve were prevented from moving rotationally, then rotation of the driver would produce exactly the same results. One rotation of the driver would be accompanied by two axial cycles of motion. However, according to this embodiment the driver moves through only one-half of an axial cycle in one complete rotation. For this to happen, sleeve rotates at three-quarters of the speed of the driver.

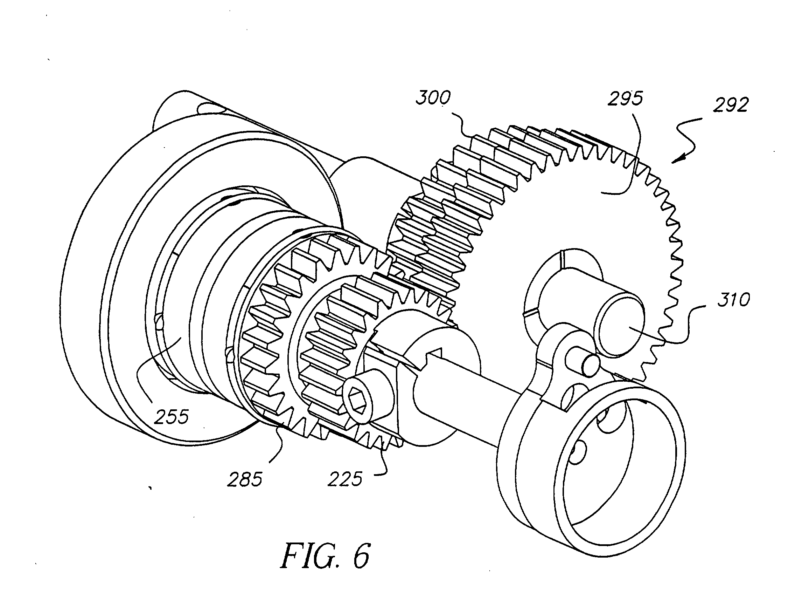

Figure 6 shows the mechanism for causing the sleeve to rotate at three-quarters of the speed of the driver. Change gear 292 is comprised of two gears 295 and 300, rigidly and concentrically attached to shaft 310, which is driven rotationally by means of a motor. Change gear 295 engages gear 225. Gear 300 engages gear 285. The ratio of the diameters of these gears is chosen to produce rotation of the sleeve at three-quarters of the rotation of the driver. The gear ratio of gear 225 to gear 295 is 1:2. The gear ratio of gear 300 to gear 285 is 3:2. The combined ratio is the product of these two ratios, 3:4. So the sleeve is caused to rotate at three-quarters of the speed of the driver, thereby causing the driver to reciprocate axially once for every two rotations.

## Claims

1. A double speed intermittent film pull down for a movie projector comprising:
a sprocket which advances said film a frame at a time;
a star wheel mounted on a first common shaft with said sprocket;
a cam which turns said sprocket every other rotation of said cam.

2. A double speed intermittent film pull down for a movie projector as in claim 1 wherein said cam moves axially to engage said star wheel every other rotation.

3. A double speed intermittent film pull down for a movie projector as in claim 1 wherein a flywheel is mounted on a common shaft with said cam and rotates in the same direction as said cam and which moves in an axial direction opposite said cam.

4. A double speed intermittent film pull down for a movie projector wherein a pin located on said cam retracts every other rotation.

5. A double speed intermittent film pull down for a movie projector as in claim 1 wherein a shutter is mounted on a second common shaft with said cam and interrupts light to said film when said film is being moved by said sprocket.

6. A double speed intermittent film pull down for a movie projector as in claim 5 wherein said shutter interrupts light to said film at twice the pull down frequency.
